(19) Europäisches Patentamt — European Patent Office — Office européen des brevets

(11) **EP 4 693 733 A1**

(12) **EUROPEAN PATENT APPLICATION**

(43) Date of publication:
**11.02.2026 Bulletin 2026/07**

(21) Application number: **24192922.3**

(22) Date of filing: **05.08.2024**

(51) International Patent Classification (IPC):
*H01Q 1/32* [(2006.01)]   *H01P 1/39* [(2006.01)]

(52) Cooperative Patent Classification (CPC):
**H01Q 21/06; H01S 1/00;** H01P 1/39; H01Q 1/3233;
H04B 7/0413

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Aptiv Technologies AG
8200 Schaffhausen (CH)**

(72) Inventors:
• **Kazimi, Sadam Hussain**
  **42115 Wuppertal (DE)**
• **Vollbracht, Dennis**
  **40721 Hilden (DE)**
• **Feiz, Nooshin**
  **42369 Wuppertal (DE)**
• **Razi, Navid**
  **42119 Wuppertal (DE)**

(74) Representative: **Manitz Finsterwald
Patent- und Rechtsanwaltspartnerschaft mbB
Martin-Greif-Straße 1
80336 München (DE)**

(54) **MIMO SYSTEM**

(57)   The present disclosure is directed at a MIMO system comprising: at least one transmitter for transmitting an electromagnetic signal, at least one receiver for receiving an electromagnetic signal, at least one transceiver antenna for radiating an electromagnetic signal into an environment and/or receiving an electromagnetic signal from the environment, and at least one air waveguide circulator connected to the at least one transmitter, to the at least one receiver and to the at least one transceiver antenna, the circulator comprising: a guiding chamber having a spherical base shape and comprising a first port, a second port and a third port for inputting and/or outputting electromagnetic signals, wherein the first port is connected to the transmitter, the second port is connected to the transceiver antenna and the third port is connected to the receiver, and a direction-guiding component disposed along a centre line of the guiding chamber, the centre line having the same distance to any of the ports and the direction-guiding component defining the direction of transmission of an inputted electromagnetic signal.

Fig. 3a

EP 4 693 733 A1

Fig. 3b

## Description

FIELD

The present disclosure relates to a MIMO (Multiple Input Multiple Output) system and a method for MIMO transmission.

BACKGROUND

Multiple Input Multiple Output (MIMO) systems represent a significant advancement in radio frequency (RF) technology, particularly within the automotive sector. These systems utilize multiple antennas at both the transmitter and receiver to enhance communication performance, offering increased data rates, improved reliability, and better spectral efficiency compared to traditional single antenna systems. In the automotive industry, MIMO systems are integral to e.g. advanced driver-assistance systems (ADAS) and vehicle-to-everything (V2X) communication, enabling safer and more efficient driving experiences.

The fundamental operation of MIMO systems involves the simultaneous transmission and reception of multiple data streams or beams across different antennas, exploiting spatial diversity to mitigate the effects of multipath propagation and interference. This spatial multiplexing allows for parallel data transmission, thereby significantly boosting the throughput and robustness of the communication link.

However, the implementation of MIMO systems in automotive RF applications presents several challenges, particularly in the design of such MIMO systems, in particular the design of the printed circuit board (PCB), e.g. a radar sensor board. One of the primary concerns is the efficient utilization of the available PCB area. The integration of multiple antennas, RF components, and complex signal processing circuits demands meticulous layout planning to ensure optimal performance. The limited space on the PCB must accommodate the intricate RF paths and maintain isolation between the numerous high-frequency signals to prevent interference and signal degradation. Moreover, maintaining the integrity of signal paths and minimizing losses becomes increasingly difficult as the frequency and density of components rise.

SUMMARY

Accordingly, there is a need to provide a MIMO system with an improved utilization of space on a PCB while maintaining sufficient isolation.

This need is satisfied by a MIMO system according to claim 1.

The present disclosure provides a MIMO system, in particular a radar system, comprising:

    at least one transmitter for transmitting an electromagnetic signal,

at least one receiver for receiving an electromagnetic signal,

at least one transceiver antenna for radiating an electromagnetic signal into an environment and/or receiving an electromagnetic signal from the environment,

at least one air waveguide circulator connected to the at least one transmitter, to the at least one receiver and to the at least one transceiver antenna, the circulator comprising:

    a guiding chamber having a spherical base shape and comprising a first port, a second port and a third port for inputting and/or outputting electromagnetic signals, wherein the first port is connected to the transmitter, the second port is connected to the transceiver antenna and the third port is connected to the receiver, and
    a direction-guiding component disposed along a centre line of the guiding chamber, the centre line having the same distance to any of the ports and the direction-guiding component defining the direction of transmission of an inputted electromagnetic signal.

The use of an air waveguide circulator enables the MIMO system to fulfil isolation requirements while reducing the occupied space on the PCB, e.g. a radar sensor board, on which the components of the MIMO system are arranged. In particular, the air waveguide circulators enable the use of transceiver antennas in MIMO systems, e.g. radar systems, instead of separate receive and transmit antennas, thereby significantly reducing space on the printed circuit board (PCB) as one transceiver antenna may replace one transmit antenna and one receive antenna. By combining the functionalities of transmitting and receiving into a single unit, transceiver antennas eliminate the need for separate antenna pathways and associated components. This integration allows for a more compact and efficient PCB layout, minimizing the number of required connections and simplifying the overall design. Consequently, the reduced component count and streamlined circuitry free up valuable space on the PCB, enabling the accommodation of additional features or the creation of smaller, more lightweight devices. Additionally, the simplified design may also simplify the production process of such devices. This space-saving advantage is particularly beneficial in applications with stringent size constraints, such as in automotive electronics or portable communication devices.

In order to leverage the prescribed advantages, the MIMO system may comprise a plurality of transmitters, receivers, transceiver antennas and self-biased air wave guide circulators. MIMO systems with multiple transceiver antennas require advanced signal processing techniques to manage and exploit the spatial diversity offered by the additional antennas. Algorithms such as spatial multiplexing, beamforming, and space-time coding are employed to separate, combine, and optimize the multiple data streams or beams. These algorithms must dynamically adjust to varying channel conditions and interference levels, utilizing techniques like channel state information (CSI) to adaptively modify transmission and reception strategies in real-time. Especially in MIMO radar systems the algorithms must be adjusted to leverage the multiple transceiver antennas for improved performance, i.e. to provide enhanced resolution, better target detection and classification, improved imaging, and more accurate tracking capabilities. MIMO processing algorithms involve complex matrix operations and require powerful hardware for real-time computation, which is necessary to maximize data throughput, minimize error rates, and enhance the overall reliability of the communication link. In particular, the integration of multiple transceiver antennas necessitates the implementation of more advanced and adaptive signal processing algorithms. There are multiple signal processing techniques such as beamforming, digital beamforming, Direction of Arrival (DoA) Estimation, Time-Domain Signal Processing, Frequency-Domain Signal Processing, Doppler Processing, Virtual Array Processing, Sparse Signal Processing, etc, which may be used in order to process the signals received by the MIMO system.

Such algorithms are known and, for instance, partially disclosed in the documents US 2022/0113399 A1, US 2023/0236288 A1 and US 2021/0373144 A1 which are herewith incorporated. The algorithms may be adjusted to the specific layout of the MIMO system in order to improve channel isolation, resolution and accuracy.

According to an embodiment the air waveguide circulator is a self-biased circulator, wherein the direction-guiding component is a physical unit. The term "self-biased" means that the circulator doesn't need any external component or influence, e.g. an external magnetic bias, in order to be able to set a direction of transmission of an electromagnetic signal, e.g. an electromagnetic wave, inputted at any of the ports. The direction-guiding component may guide the electromagnetic signal from an input port to an output port. In particular, the direction-guiding component may guide the electromagnetic signal in a predetermined direction. The direction-guiding component may solely define to which output port an inputted electromagnetic signal is directed and which port is, in particular simultaneously, isolated. The direction-guiding component may be any kind of magnetically active material generating a magnetic field.

Furthermore, the direction-guiding component is a physical unit, i.e. it has a spatial and physical continuity. The direction-guiding component may be an assembled unit which may comprise physically joined, i.e. connected, components. However, the direction-guiding component does not comprise any external component or bias for inducing a non-reciprocal behavior. In fact, the direction-guiding component itself is capable of providing non-reciprocity without needing any, in particular magnetic, interaction with an external component. Therefore, the need for external components such as external magnet is eliminated resulting in a circulator of reduced size.

As the circulator is an air waveguide circulator, the circulator is configured to transmit electromagnetic signals via the air. Hence, the guiding chamber is essentially hollow. The hollow space inside the circulator may be filled with air or a vacuum which means that the signal transmission essentially takes place in a low-loss medium. The guiding chamber may be made out of any suitable material such as aluminium, copper, silver-plated copper, stainless steel or any other kind of suitable material.

Usually, an electromagnetic signal provided at an input port of the circulator is directed to an output port of the circulator using the direction-guiding component which guides the electromagnetic signal within the guiding chamber and/or sets the direction of transmission, i.e. clockwise or anti-clockwise, wherein the remaining port is for the most part isolated from any signal transmission.

Directing of electromagnetic signals within a circulator works through the principles of non-reciprocity and magnetically biased operation.

Circulators are non-reciprocal devices, meaning they allow electromagnetic signals to travel in one direction more effectively than in the opposite direction. This non-reciprocity is crucial for applications like radar systems and communication networks where signal isolation and directionality are required.

Circulators typically use a magnetic field to induce non-reciprocal behavior. This magnetic field is applied perpendicular to the direction of signal propagation inside the circulator. The interaction between the magnetic field and the electromagnetic waves causes the waves to travel differently depending on their direction of propagation relative to the magnetic field.

An airwave guide circulator, as disclosed herein, typically has three or more ports. When an electromagnetic signal enters one port, the circulator directs it to the next port in a predetermined sequence, depending on the direction of the magnetic field and the design of the circulator.

Depending on the strength and direction of the magnetic field the path of the electromagnetic signals can be influenced. This allows them to direct signals from one port to another while isolating signals traveling in the opposite or a different direction. For example, the path of the electromagnetic signal to be transmitted is influenced or determined by adjusting the strength and direction of the magnetic field to the frequency of the transmitted electromagnetic signal. This may be achieved by selecting an appropriate material of the direction-guiding component.

The electromagnet signals may have a frequency in ranges of 1 GHz to 40 GHz, e.g. in microwave systems, 2 GHz to 30 GHz, e.g. in telecommunication applications, 12-18 GHz (Ku-band) and 26.5-40 GHz (Ka-band), e.g. in satellite communications, 8-12 GHz (X-band), 2-4 GHz (S-band), 4-8 GHz (C-band) and 12-18 GHz (Ku-band) and/or 60 GHz to 90 GHz (E-Band), e.g. in radar systems. The circulator may further be used in an automotive radar system, wherein the frequency of the electromagnetic signal to be transmitted may be between 76 and 81 GHz, in particular between 76 and 77 GHz.

Achieving high isolation typically involves careful design and material selection to minimize parasitic coupling and to maintain the integrity of the signal pathways. Effective isolation not only improves the performance of the circulator itself but also enhances the overall efficiency and reliability of the system in which it is implemented. In particular, the guiding chamber where the paths of the respective waveguides connected to the circulator are merged is designed to improve the isolation characteristics of the circulator.

As herein described, the guiding chamber has a spherical base shape, thereby improving isolation characteristic of the circulator. In other words, the guiding chamber has an outer surface wall which runs at least partially along a spherical surface with a predetermined radius. The spherical base shape of the guiding chamber may have a radius of less than 10 mm, less than 5 mm, less than 3 mm or less than 2mm.

The spherical geometry allows for a more symmetrical distribution of electromagnetic fields within the circulator. This symmetry helps to minimize asymmetrical coupling between ports, thereby improving isolation. The spherical geometry may provide a three-dimensional mirror symmetry in order to enhance the port isolation.

Unlike circulators with non-spherical geometries that may have sharp edges or corners, a spherical circulator reduces discontinuities in the electric and magnetic fields. This reduction in edge effects lowers the chances of unwanted signal coupling between isolating ports

Furthermore, spherical circulators support more uniform propagation of electromagnetic modes compared to non-spherical geometries. This uniform mode distribution helps reduce interactions between different modes traveling through the circulator, contributing to better isolation.

Moreover, the magnetic field can be more evenly applied and distributed around the spherical path, optimizing its effectiveness in controlling the direction of signal flow and enhancing isolation.

According to an embodiment, the direction-guiding component comprises hard magnetic material, preferably strontium hexagonal ferrite. The direction-guiding component may comprise any kind of ferrite material. Strontium hexagonal ferrite is a suitable option due to its elevated magnetic anisotropy field ensuring non-reciprocal behavior. However, the direction-guiding component may comprise any kind of ferrite material. The direction-guiding component may additionally comprise hard magnetic materials which are non-ferrite such as SmCo, NdFeB, Aluminium-Nickel-Cobalt or the like.

In many conventional circulators soft magnetic materials are used which necessitate an external magnet, e.g. a permanent magnet, for inducing non-reciprocity. By using hard magnetic material the need for such external magnets is eliminated. Thus, the size of the circulator can be reduced resulting in a compact design.

Moreover, the direction-guiding component may be adjusted to the frequency bandwidth of the electromagnetic signals to be transmitted. For example the material of the direction-guiding component may be selected based on the frequency and/or the frequency bandwidth of the electromagnetic signals in order to obtain desired signal transmission and/or isolation characteristics. Hard magnetic materials have specific magnetic properties that can be strongly influenced by the frequency of the passing signals. These materials often have a characteristic resonance frequency at which they work most effectively. The effectiveness of the generated magnetic field depends on the resonance frequency of the material. Outside of this resonance frequency, the magnetic properties of the material can diminish, which can impair the performance of the circulator.

The direction-guiding component may have a cylindrical shape and may comprise at least two ferrite disks. For example, the direction-guiding component penetrates the guiding chamber at least partially along the centre line of the guiding chamber. The surface of the direction-guiding component may seamlessly transition into the surface of the guiding chamber resulting in a smooth surface structure. Furthermore, a first ferrite disk may be disposed at first end of the cylindrical shaped direction-guiding component and a second ferrite disk may be disposed at a second end of the direction-guiding component. The ferrite disks may induce a magnetic field in order to ensure the desired non-reciprocal behavior of the circulator.

The direction-guiding component may further comprise a polymer base structure. The polymer base structure may comprise Teflon. For example, the base structure of the direction-guiding component may consist of a polymer like Teflon wherein the ferrite disks may be arranged at the ends of the base structure or at predetermined positions along the base structure. The ferrite disks may have a smaller diameter than the diameter of the polymer base structure. Additionally, the height of the ferrite disks, i.e. their expansion in an axial direction, may be significantly smaller than the height of the direction-guiding component. More particular, the height and/or volume of a respective ferrite disk may be three times, 5 times or 8 times smaller than the height and/or volume of the overall direction-guiding component.

Using a polymer as a base structure provides mechanical stability and support for the ferrite disks to ensure their structural integrity. Furthermore, polymers such as Teflon have high thermal stability and may help manage heat efficiently, protecting the ferrite material from thermal stress. Moreover, they have a very low dielectric loss tangent, leading to minimal signal loss at high frequencies, thereby supporting the efficient transmission of high-frequency signals. Polymers are chemically inert and protect the ferrite material from environmental influences and chemical degradation, extending the circulator's lifespan. Lastly, a polymer may aid in impedance matching to minimize reflections and losses, ensuring efficient signal transmission.

According to an embodiment, the guiding chamber comprises at least one recess between two adjacent ports. A recess may be a slit or a groove in the surface of the guiding chamber extending from an upper section of the guiding chamber to a lower section of the guiding chamber. In other words, the recess may be a deepening, in particular any kind of deepening within the surface of the guiding chamber. In a cross section of a top view of the circulator such a recess may extend radially inwards, thereby interrupting the circular shape of the guiding chamber.

Implementing recesses between adjacent ports may improve the isolation characteristics of the circulator. In particular, recesses increase the surface area between two ports, enhancing the scattering of electromagnetic waves. This leads to a reduction in signal transmission between the input port and the isolated port. Moreover, electromagnetic bandgap (EBG) structure energy may be reflected in a specified band gap. This effect is based on the EBG phenomenon.

The EBG phenomenon refers to a property of certain structures or materials that inhibit the propagation of electromagnetic waves within specific frequency ranges. These structures utilize periodic variations in material properties or geometry to block particular wavelengths or frequencies of electromagnetic waves. Such a structure is implemented between adjacent ports by using the prescribed recesses. The structures may be characterized by a periodic arrangement of materials with differing dielectric or magnetic properties. These periodic arrangements, for instance, may create band gaps, where the propagation of electromagnetic waves is prohibited or prevented. The arrangement of recesses may therefore be adjusted to the transmitted electromagnetic signals, i.e. to the specified frequency range of the electromagnetic signals. The periodic nature of the structure may cause constructive and destructive interference of electromagnetic waves. For specific frequencies, the waves reflected within the structure interfere destructively, preventing the propagation of those frequencies. Similar to semiconductors, where electrons cannot exist in certain energy bands (band gaps), EBG structures may feature frequency ranges (electromagnetic band gaps) where no electromagnetic wave propagation occurs. This may reduce undesired propagation of signals between ports, in particular between ports which are meant to be isolated from each other. What is more, recesses may increase the electrical length between adjacent ports, improving impedance matching and minimizing reflections. This is critical in high-frequency applications to reduce losses and reflections.

The recesses may be evenly distributed between two adjacent ports. For example, two adjacent recesses have a predetermined distance to each other which is the same for any adjacent recesses. The guiding chamber may have two or three recesses between two adjacent ports. However, the guiding chamber may also have more than 3 recesses between two adjacent ports. The guiding chamber may have at least three per physical wavelength of the electromagnetic signal. The guiding chamber may also have a different amount of recesses between different ports. E.g. the guiding chamber may have a first number of recesses between a first port and a second port, the guiding chamber may further have a second number of recesses between the second port and a third port and the guiding chamber may have a third number of recesses between the third port and the first port. However, preferably the guiding chamber has the same amount of recesses between two adjacent ports for any of the ports of the guiding chamber. I.e. the guiding chamber has the same number of recesses between the first and second port, the second and third port as well as the first and third port. In other words, the arrangement of recesses of the guiding chamber may be symmetrical.

According to an embodiment, the recesses have a corrugated shape. The guiding chamber may have corrugations as electromagnetically soft surfaces. The recesses may also form a corrugated shape. A recess may extend from an upper section of the guiding chamber to a lower section of the guiding chamber wherein the terms "upper" and "lower" may be defined by the two ends of the central line or by the two ends of the direction-guiding component, wherein one end may be an "upper end" and the other end may be a "lower end". Upper may also mean above a middle plane comprising the middle point of the spherical shape wherein the middle plane is perpendicular to the centre line. Accordingly, the term "lower" may mean below said middle plane. In a top view the recesses may appear rectangular, wherein the recesses extend radially inwards. Though the recesses are described to have a corrugated shape, the recesses may comprise any suitable shape.

A depth of a recess may be at least 1/10, in particular at least 1/5, in particular at least 1/3 of the radius of the spherical base shape. The term "depth" used herein relates to the radial extension of the recesses. By increasing the depth of the recesses the isolation effect can be maximized. In particular, undesired reflection of the electromagnetic signals can be prevented. The depth of the recesses may also be adjusted to the desired isolation characteristics of the circulator. However, the depth of the recesses should be designed to provide an S-parameter-value of the isolated port corresponding to the isolation of the isolated port which is lower than -30 dB or lower than -35 dB.

A width of a recess may be smaller than the minimal distance between two adjacent recesses, in particular two times smaller than the minimal distance between two adjacent recesses or four times smaller than the minimal distance between two adjacent recesses. The term "width" used herein relates to the extension of the recesses in circumferential direction. By reducing the witdth of the recesses the isolation effect can be maximized. In particular, undesired reflection of the electromagnetic signals can be prevented. The width of the recesses may also be adjusted to the desired isolation characteristics of the circulator. However, the width of the recesses should be designed to provide an S-parameter-value of the isolated port which is lower than -30 dB or lower than -35 dB. It is also possible to have recesses having differing depths and/or widths.

The guiding chamber may have a holding section for holding the direction-guiding component, wherein the direction-guiding component is disposed in the holding section. The holding section may be adjusted to the design and/or shape of the direction-guiding component. I.e. the guiding chamber comprises a cavity or a passage running through the guiding chamber for holding or mounting the direction-guiding component.

The guiding chamber may comprise holding structures for holding the direction-guiding component within the holding section. The guiding chamber and/or holding section may comprise clips or other connection components to attach the direction-guiding component to the guiding chamber. During a production process the direction-guiding component may therefor be easily attached to the guiding chamber in a safe and reliable manner. Hence, the efficiency of production may be enhanced.

According to an embodiment, impedance matching is performed using a quarter-wavelength matching technique, wherein the distance between two adjacent ports is designed to be a quarter of a wavelength of the transmitted electromagnetic signal. The quarter wavelength technique may be used for matching the circulator port impedance to the connected waveguide impedance. Impedance matching is crucial in order to ensure that the maximum amount of power is transferred between the ports with minimal loss and to prevent signal reflections that can lead to inefficiencies and potential interference in the system. Proper matching maintains the signal quality by preventing distortion and ensuring that the signal travels as intended through the circulator. Hence, the circulator dimensions may be chosen to ensure that the characteristic impedance matches that of the connected components.

In order to improve impedance matching, matching stubs may be used. These are short sections of waveguide or resonant structures added to the circulator to adjust the impedance. They can be capacitive or inductive, depending on the nature of the mismatch. Furthermore, the material of the direction defining component, e.g. of the ferrite material, may be selected in order to adjust the magnetic bias field, to achieve proper impedance matching. The ferrite's properties may affect the propagation constants and thus the impedance characteristics of the circulator.

Furthermore, when an electromagnetic signal travels through the ferrite, it experiences a phase or impedance shift proportional to the wavelength and the magnetic field strength. By designing the circulator such that the total phase shift for a round trip (forward and backward) is approximately a quarter wavelength ($\pi/2$ radians or 90 degrees), the circulator ensures that forward and reverse waves interfere constructively in one direction and destructively in the opposite direction.

The dimensions of the air waveguide, including its cross-sectional dimensions and length, in particular the distance between two adjacent ports, may therefore be determined in such a manner that ensures the correct phase relationship over the operating frequency range.

An S-parameter-value corresponding to the isolation of a respective isolated port of the circulator may be lower than -30 dB, preferably less than -35 dB, for a specified frequency range of the transmitted electromagnetic signals, wherein the S-parameter value $S_{iso}$ is calculated based on the following equation:

$$S_{iso} = -10 \log_{10} \frac{P_{leak}}{P_{in}}$$

wherein $P_{in}$ is an input power at the port where the electromagnetic signal enters the circulator and $P_{leak}$ is the power that leaks into an unintended port.

An S-parameter-value of the insertion loss corresponding to the amount of signal power lost as the signal passes from one port to the next intended port may be higher than -0.25 dB, wherein the S-parameter-value $S_{IL}$ is calculated based on the following equation:

$$S_{IL} = -10 \log_{10} \frac{P_{out}}{P_{in}}$$

wherein $P_{in}$ is the input power at the port where the signal enters the circulator and $P_{out}$ is the output power at the port where the signal exits the circulator.

The three ports of the circulator may be offset by 120 degrees to each other. The 120-degree offset ensures that each port interacts with the adjacent ports in a specific manner. The physical arrangement of the circulator's ports is designed to maintain precise angular spacing to achieve the desired phase relationships. This spacing is critical for controlling the interference patterns and ensuring proper operation across the circulator's frequency range.

The circulator may further comprise connection elements which are connected to the guiding chamber via the at least three ports, wherein the connection elements are configured to connect the ports of the guiding chamber to respective waveguides. The connection elements may be also designed as part of the guiding chamber. For example, the connection elements and the guiding chamber may be formed in one-piece. The connection elements may be made out of the same material as the guiding chamber in order to enhance transmission of the electromagnetic signal. Furthermore, the connection elements may be configured to guide the electromagnetic signals into the guiding chamber via the ports. The connection element may further taper in a peripheral direction, i.e. the cross-sectional surface of the connection elements may shrink in a peripheral, i.e. a radially outwards, direction.

According to an embodiment, the MIMO system comprises four transmitters, four receivers, four transceiver antennas and four self-biased air wave guide circulators, wherein each of the self-biased air wave guide circulators is connected to a respective transmitter, a respective receiver and a respective transceiver antenna. The use of multiple transceiver paths improves the system's ability to detect weak signals and enhances sensitivity, leading to better detection of smaller or more distant targets. Moreoever, with multiple independent observations of the same target, MIMO systems can provide more accurate estimates of target parameters such as range, velocity, and angle. This spatial multisignal processing capability can significantly boost the robustness and reliability of detection and tracking of objects e.g. in automotive radar applications. With multiple transceiver antennas, the system can leverage spatial diversity to combat signal fading and multipath interference. This redundancy ensures more reliable communication links, which is critical for safety-related applications like advanced driver-assistance systems (ADAS) and vehicle-to-everything (V2X) communication. Moreover, multiple transceiver antennas can provide better coverage and extended range by employing techniques such as beamforming. Beamforming directs the transmission power in specific directions, enhancing signal strength and quality, which is essential for maintaining robust communication in dynamic and challenging automotive environments. The presence of multiple transceiver antennas further allows for advanced interference mitigation techniques, such as spatial filtering. By distinguishing and separating signals from different sources, the system can effectively reduce the impact of interference from other vehicles or communication devices, leading to clearer and more stable communication channels. Multiple transceiver antennas provide a flexible platform that can adapt to various communication needs and future technological advancements. This scalability is advantageous for integrating new features and supporting evolving standards without extensive hardware modifications.

According to an embodiment, a first number of the transceiver antennas are disposed along a first, straight line in an azimuth direction or elevation direction forming a linear array. The term "in an azimuth direction" may mean along a horizontal line, e.g. on a PCB. Accordingly, "in an elevation direction" may mean along a vertical line. An advantage of such a design is the simplicity of design and implementation. Linear arrays may be simple to configure and to integrate into various systems, making them a cost-effective solution for enhancing communication capabilities. In particular, linear arrays may excel in beamforming and directionality, allowing the system to focus the transmission and reception of signals in specific directions. Such a focused beam can significantly improve signal strength and quality while reducing interference from unwanted directions. Moreover, linear arrays may provide spatial diversity, which helps mitigate multipath fading and enhances overall link reliability. Their compact and elongated form factor is also well-suited for applications where space is limited, such as in automotive radar systems and mobile devices. In summary, linear arrays contribute to more efficient and effective MIMO systems, optimizing performance and reliability.

According to an embodiment, a second number of the transceiver antennas are disposed along a second, straight line in an azimuth direction or elevation direction, wherein the transceiver antennas form a planar array. The second number of transceiver antennas may also from a linear array. The first and second number of transceiver antennas in combination may form a planar array. If the first number of transceiver antennas and the second number of transceiver antennas are both disposed in an azimuth direction or elevation direction the first number of transceiver antennas may be positioned with an offset in an elevation direction or azimuth direction, respectively, in order to form a planar array.

A planar array is a configuration of antennas arranged in a two-dimensional plane. Unlike linear arrays, where antennas are aligned in a single straight line, a planar array consists of antennas distributed in rows and columns, forming a grid-like structure. This arrangement allows for more complex and flexible beamforming and directionality control, making planar arrays highly effective in various applications, particularly in advanced communication and radar systems. The two-dimensional structure of planar arrays allow for finer spatial resolution, precise targeting and tracking of signals and more flexible.

According to an embodiment, a distance between a first and second transceiver antenna is $2\lambda_0$, a distance between the second and a third transceiver antenna is $0.5\lambda_0$ and a distance between the third and a fourth transceiver antenna is $2.5\lambda_0$, wherein $\lambda_0$ corresponds to the wavelength of the electromagnetic signal. Such a configuration may improve an aperture of the "virtual array" of the MIMO system resulting in a better angular accuracy and an overall improved target identification. In a MIMO system, a "virtual array" refers to the effective or perceived array configuration created by the combination of multiple transmit antennas, receive antennas and/or transceiver antennas. This virtual array concept arises from the ability of MIMO systems to use multiple antennas at both the transmitter and receiver to create multiple propagation paths between them. These multiple paths can be exploited to provide a finer spatial resolution, which is crucial for distinguishing closely spaced targets. Moreover, the virtual array concept may enable better angular resolution, allowing a radar to more accurately estimate the direction of arrival (DoA) of signals resulting in clearer and more precise target localization.

As the same antenna elements are used for transmission and reception, the antenna geometries are designed in accordance with the foregoing section such that it synthesizes a virtual array where targets may be resolved unambiguously with existing angle finding methods.

According to an embodiment, a distance between a first and second transceiver antenna is $1.5\lambda_0$, a distance between the second and a third transceiver antenna is $0.5\lambda_0$ and a distance between the third and a fourth transceiver antenna is $1.5\lambda_0$.

According to an embodiment, the MIMO system further comprises receive antennas associated with the receive antennas, wherein each of the receive antenna is connected to a respective receiver. For instance, the MIMO system may comprise 4 receive antennas and 4 receivers associated with the receive antennas. However, the MIMO system may comprise more or less than 4 receive antennas.

Combining transceiver antennas with conventional receive antennas may improve signal processing by reducing interference and enhancing weak signal detection. This setup increases the system's aperture size and therefore spatial resolution and beamforming capabilities, allowing for precise target detection and tracking. The additional receive antennas provide redundancy, enhancing system reliability and fault tolerance by compensating for any single antenna failure. Flexibility is also improved, as the system can dynamically switch between different antenna roles to optimize performance based on specific operational needs. Enhanced interference mitigation is another major benefit, as the additional receive antennas enable sophisticated spatial filtering techniques to better distinguish between desired signals and interference. This capability is crucial in noisy environments.

According to an embodiment, at least one of the receive antennas is disposed along a third straight line, wherein the third line is perpendicular to the first and/or second line. Hence, depending on the direction of the first and/or second line the third line may be in an azimuth or elevation direction. Additionally, at least one of the receive antennas may be disposed in the first line and/or second line. The perpendicular arrangement of the receive antennas may leverage the benefits of a planar array configuration as previously described. The foregoing advantages of planar array configurations may be applied accordingly.

According to an embodiment, the arrangement of transceiver antennas and/or receive antennas comprises a combination of at least two of the following: coprime arrays, dense arrays and sparse arrays.

Coprime arrays use the mathematical properties of coprime integers to achieve a large effective aperture with fewer physical elements. For example, two arrays are constructed using elements spaced at intervals determined by two coprime numbers (i.e., two numbers with no common factors other than one). This configuration allows for the generation of a virtual array with a much higher number of elements than the physical array, enhancing spatial resolution and the ability to detect and distinguish closely spaced targets.

The key advantage of coprime arrays is their ability to achieve high resolution with reduced hardware complexity. By leveraging the coprime spacing, these arrays can form a large number of virtual antenna elements, leading to finer angular resolution and improved direction-of-arrival (DoA) estimation. This makes coprime arrays particularly useful in applications where space and cost constraints limit the number of physical antenna elements.

Dense arrays are characterized by closely spaced antenna elements, wherein the antenna elements are typically spaced less than half a wavelength apart. This close spacing allows for excellent spatial sampling and high-resolution imaging, making dense arrays ideal for applications requiring precise target detection and fine detail resolution.

The main advantage of dense arrays is the ability to accurately capture the spatial structure of incoming signals, reducing the risk of spatial aliasing and providing high-quality beamforming capabilities. However, the dense placement of elements increases the complexity and cost of the array, as more elements and associated hardware are needed. However, by combining the principle of dense arrays with the principles of sparse and/or coprime arrays these difficulties may be overcome.

Sparse arrays, in contrast to dense arrays, are defined in that the antennas are spaced at intervals greater than half a wavelength. This wider spacing reduces the number of physical elements required, lowering the cost and complexity of the array. Sparse arrays are designed to cover a larger aperture with fewer elements, providing a practical solution for applications where a large field of view is needed, or physical space is limited.

The primary advantage of sparse arrays is their cost-effectiveness and ease of deployment, as they require fewer elements to achieve a given aperture size. However, the wider spacing can lead to spatial aliasing, where signals from different directions become indistinguishable. To mitigate this, sophisticated signal processing techniques may be used to resolve ambiguities and enhance spatial resolution.

Combining the foregoing antenna arrangement types may leverage the advantages of each of the arrangement types while minimizing the downsides. In particular, such a hybrid configuration may enhance resolution, reduce cost and complexity, improve signal processing capabilities, and offers greater flexibility and scalability.

According to an embodiment, the transceiver antennas are disposed along the first line in an azimuth direction, wherein the receive antennas are disposed along the third line in an elevation direction, wherein the first receive antenna is disposed on an intersection of the first and third line, wherein a distance between a first and second transceiver antenna is $1.5\lambda_0$, a distance between the second and a third transceiver antenna is $0.5\lambda_0$ and a distance between the third and a fourth transceiver antenna is $1.5\lambda_0$, wherein a distance between the fourth transceiver antenna and the first receive antenna is $\lambda_0$, a distance between the first and a second receive antenna is $\lambda_0$, a distance between the second and a third receive antenna is $1.5\lambda_0$ and a distance between the third and a fourth receive antenna is $2\lambda_0$, wherein $\lambda_0$ corresponds to the wavelength of the electromagnetic signal.

Furthermore, the first to third receive antennas may be disposed along the first line and the fourth receive antenna may be disposed along the third line, wherein the fourth receive antenna is positioned with an offset in an elevation direction. In such a case, the spacing of the transceiver antennas may be in accordance with the spacing described in the foregoing paragraph, but a distance between the fourth transceiver antenna and a first receive antenna may be $\lambda_0$, a distance between the first and second receive antenna may be $\lambda_0$, a distance between the second and a third receive antenna may be $3\lambda_0$ and a distance between the third and a fourth receive antenna may be $2.5\lambda_0$, wherein a distance between the fourth receive antenna and the first line may be $\lambda_0$. Moreover, the elevation offset of the fourth receive antenna with respect to the remaining receive antennas may be $6\lambda_0$. According to an embodiment, at least one waveguide channel connected to a first transceiver antenna and at least one waveguide channel connected to a second transceiver antenna are arranged on different layers of a PCB. Implementing a two-layer routing strategy in MIMO systems, where channels from different transceiver antennas are placed on different PCB layers, provides significant advantages. Such an arrangement may reduce signal interference and crosstalk between channels, improving overall signal integrity and reliability. It also enhances electromagnetic compatibility (EMC) by shielding electromagnetic signals from external interference. Moreover, two-layer routing optimizes PCB layout efficiency and provides a flexibility in designing the MIMO system. Moreover, a first number of channels of the PCB may be arranged on a first layer of the PCB, wherein a second number of channels of the PCB may be arranged on a second layer of the PCB. The selection of a layer on which a respective channel may be arranged can be performed individually in order to enhance the prescribed effects.

In another aspect, the present disclosure is directed at a method for MIMO transmission using a MIMO system according to any of the preceding claims, comprising:

> transmitting an electromagnetic signal, using a transmitter, to a first port of an air waveguide circulator,
> directing the electromagnetic signal to a second port of the air waveguide circulator,
> transmitting the electromagnetic signal from the second port of the air waveguide circulator to a transceiver antenna,
> radiating the electromagnetic signal into an environment using the transceiver antenna,
> receiving a reflected electromagnetic signal reflected from an object in the environment by the transceiver antenna,
> transmitting the reflected electromagnetic signal from the transceiver antenna to the second port of the air waveguide circulator,
> directing the reflected electromagnetic signal from the second port to a third port of the air waveguide circulator,
> transmitting the reflected electromagnetic signal from the third port to the receiver, determining a distance between the MIMO system and the object based on the reflected electromagnetic signal.

The transmitter may generate an electromagnetic signal, e.g. a high-frequency signal, which may be a pulse or a continuous wave. The electromagnetic signal is then fed into the air waveguide circulator, which is a three-port apparatus designed to direct signals in a specified sequence. The air waveguide circulator directs the electromagnetic signal from the first port to the second port while sufficiently isolating the third port. From the second port the electromagnetic signal is transmitted to the transceiver antenna.

When the signal reaches the transceiver antenna, it is radiated into the environment, propagating through space until it encounters a target, such as an aircraft or an object. The signal reflects off the target and returns towards the MIMO system. Upon reaching the MIMO system, the reflected signal is captured by the transceiver antenna.

The reflected signal is then directed towards the second port of the air waveguide circulator by the transceiver antenna. The air waveguide circulator directs the reflected electromagnetic signal from the second port to the third port while sufficiently isolating the first port, ensuring that the transmitter and receiver do not interfere with each other. This seamless switching between transmission and reception allows the MIMO system to effectively use a single antenna for both transmitting and receiving electromagnetic signals.

Once the reflected electromagnetic signals are directed to the receiver, they may be processed, e.g. in order to perform object detection. For example, a distance between the MIMO system and an object may be detected based on the reflected electromagnetic signal. In particular, the distance may be determined based on a TOF-method (Time-of-Flight) or an FMCW-method (frequency modulated continuous wave). The reflected electromagnetic signals may undergo amplification and conversion from high-frequency signals to a lower, more manageable frequency. The intermediate frequency (IF) signal may then be processed to extract valuable information about the target, such as its distance, speed, and direction. A signal processor may perform various operations, including filtering, amplification, and digital signal processing, to interpret the received signals accurately.

It is to be noted that the foregoing explanations with respect to the MIMO system may apply to the method accordingly, if they are applicable.

DRAWINGS

Exemplary embodiments and functions of the present disclosure are described herein in conjunction with the following drawings, showing schematically:

Fig. 1    a flow diagram illustrating an operation of a circulator according to an embodiment of the present disclosure

Fig. 2    a top view of a circulator according to an embodiment of the present disclosure

Fig. 3a    a perspective view of a circulator according to an embodiment of the present disclosure

Fig. 3b    a cross-sectional view of a circulator according to an embodiment of the present disclosure

Fig. 4    a circuit layout of a MIMO system according to the prior art (a) and according to an embodiment of the disclosure (b)

Fig. 5    an antenna configuration (a), a corresponding virtual array (b) and a corresponding ambiguity plot (c) according to the prior art

Fig. 6    an antenna configuration (a), a corresponding virtual array (b) and a corresponding ambiguity plot (c) according to an embodiment of the present disclosure

Fig. 7    an antenna configuration (a), a corresponding virtual array (b) and a corresponding ambiguity plot (c) according to the prior art

Fig. 8    an antenna configuration (a), a corresponding virtual array (b) and a corresponding ambiguity plot (c) according to an embodiment of the present disclosure

Fig. 9    an antenna configuration (a), a corresponding virtual array (b) and a corresponding ambiguity plot (c) according to an embodiment of the present disclosure

DETAILED DESCRIPTION

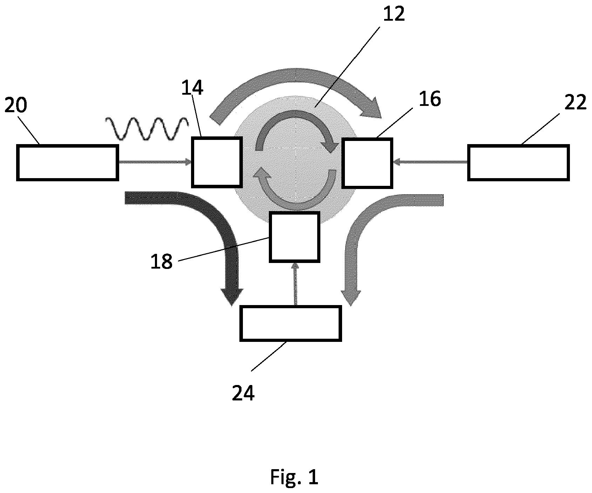

Fig. 1 depicts a flow diagram illustrating an operation of a circulator according to an embodiment of the present disclosure. The circulator 12 comprises a first port 14, a second port 16 and a third port 18.

A transmitter 20 which generates an electromagnetic signal, is connected to the first port 14 of the circulator 12. An antenna 22, responsible for radiating the signal into the environment or receiving signals from it, is connected to the second port 16. A receiver 24, which processes incoming signals, is connected to the third port 18.

When the transmitter 20 sends out an electromagnetic signal, it enters the circulator 12 at the first port 14. The circulator 12 is designed using a direction-guiding component 28 comprising a hard magnetic material, e.g. strontium hexagonal ferrite, and a induced magnetic field to create non-reciprocal paths for the electromagnetic signal. Due to this design, the signal from the first port 14 is directed to the second port 16 essentially without leaking to the third port 18. As a result, the signal travels through the air waveguide circulator 12 and exits at the second port 16, where it is radiated into the environment by the antenna 22.

Conversely, when the antenna 22 receives an electromagnetic signal, this incoming signal enters the circulator 12 at the second port 16. The circulator 12 then routes the signal to the third port 18, directing it to the receiver 24. This ensures that the receiver 24 processes only the signals received from the antenna 22 and not the signals directly from the transmitter 20.

The circulator's 12 non-reciprocal behavior is crucial for maintaining isolation. The design ensures that signals can flow from the transmitter 20 to the antenna 22 and from the antenna 22 to the receiver 24, but not directly from the transmitter 20 to the receiver 24. In particular, the isolation of the isolated port, i.e. the port which shouldn't receive any signal during a transmission process, is less than -30 dB (S-parameter value) at the specified frequency range of the electromagnetic signal to be transmitted. This directional coupling is achieved by the precise arrangement of the circulator's 12 ports 14, 16, 18, which are typically offset by 120 degrees in a three-port circulator. In a four-port circulator the ports may be offset by 90 degrees, respectively. This arrangement, combined with the quarter-wavelength impedance matching technique, creates the necessary phase shifts to ensure efficient signal routing and minimal reflections.

By using the air waveguide circulator 12, the system effectively manages the transmission and reception of signals, ensuring that each component - transmitter 20, antenna 22, and receiver 24 - operates optimally without causing or experiencing interference from the other components.

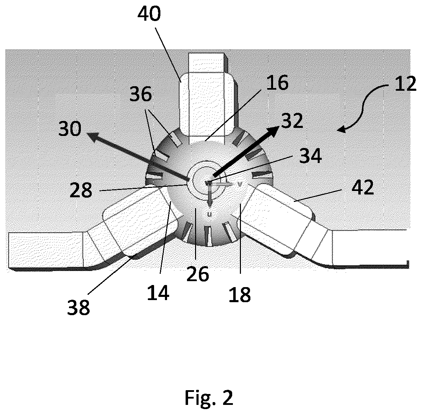

Fig. 2 illustrates a top view of a circulator 12 according to an embodiment of the present disclosure. The circulator 12 comprises a guiding chamber 26 having a spherical base shape and three ports 14, 16, 18 for inputting and/or outputting electromagnetic signals and a direction-guiding component 28 comprising a Teflon base structure 30 and strontium hexagonal ferrite disks 32. The direction-guiding component 28 is disposed along a centre line 34 of the guiding chamber 26, the centre line 34 having the same distance to any of the ports 14, 16, 18 and the direction-guiding component 28 defining the direction of transmission of an inputted electromagnetic signal, i.e. to which port a signal entering one of the ports 14, 16, 18 of the circulator 12 is directed.

The guiding chamber 26 further comprises three recesses 36 between two adjacent ports 14, 16, 18, respectively. The recesses 36 have a corrugated shape and are evenly distributed between two adjacent ports 14, 16, 18 of the circulator 12. The ports 14, 16, 18 are connected to respective connection elements 38, 40, 42 which are connected to the guiding chamber via the at least three ports 14, 16, 18, wherein the connection elements 38, 40, 42 are configured to connect the ports 14, 16, 18 of the guiding chamber 26 to respective waveguides transmitting the electromagnetic signal.

The recesses 36 of the guiding chamber 26 improve the isolation behavior of the circulator 12. In particular, the recesses 36 increase the surface area between two adjacent ports 14, 16, 18, enhancing the scattering of electromagnetic waves. This leads to a reduction in signal transmission between the input port and the isolated port. Moreover, electromagnetic bandgap structure energy may be reflected in a specified band gap. This may reduce undesired propagation of signals between ports 14, 16, 18. What is more, recesses 36 may increase the electrical length between adjacent ports 14, 16, 18, improving impedance matching and minimizing reflections. This is critical in high-frequency applications to reduce losses and reflections.

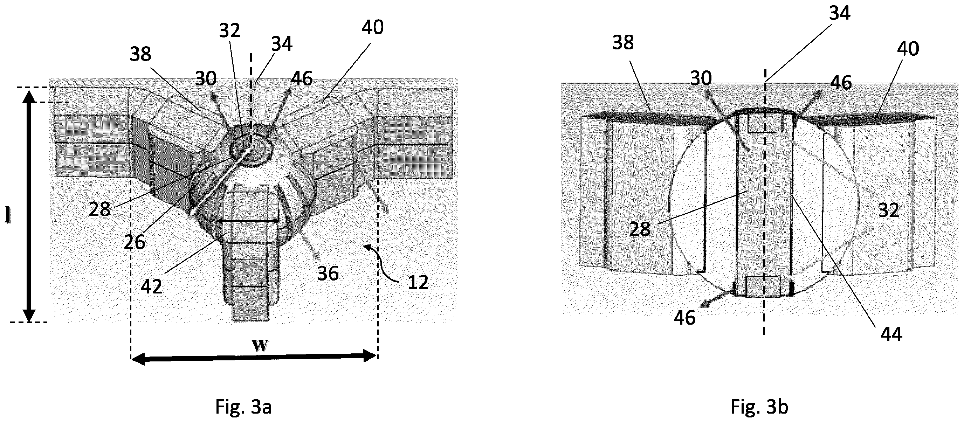

Fig. 3a depicts a perspective view of the circulator 12 of Fig. 2, wherein Fig. 3b depicts a cross-sectional view of the corresponding circulator 12.

As shown in Fig. 3a, the guiding chamber 26 has a spherical base shape which is interrupted by the ports 14, 16, 18, the connection elements 38, 40, 42 and the recesses 36. The recesses 36 extend from an upper section of the guiding chamber to a lower section of the guiding chamber linearly. Herein, the term "upper" means above a middle plane comprising the middle point of the spherical shape wherein the middle plane is perpendicular to the centre line. Accordingly, the term "lower" means below said middle plane. The radius r of the spherical base shape may be smaller than 5 mm, smaller than 3 mm or smaller than 2 mm. In Fig. 3a the radius r of the spherical base shape is 1.76 mm, wherein a length l of the circulator 12 depicted in Fig. 3a is 7 mm and a width of the circulator 12 is 6 mm. As previously described, the recesses 36 enhance isolation characteristics of the circulator 12.

Fig. 3b illustrates, in particular, the direction-guiding component 28 and its arrangement within the circulator 12. The direction-guiding component 28 has a cylindrical shape and comprises the Teflon base structure 30 which is penetrating the guiding chamber 26 along the centre line 34 and the ferrite disks 32 which are disposed at opposing ends of the cylindrical direction-guiding component 28. In a cross-sectional view the Teflon base structure 30 has an H-shape wherein the ferrite disks 32 are included in the cavities of the H-shaped structure. The direction-guiding component 28 is further fixed and/or hold within a holding section 44 by using holding structures 46, such as clippers or any other suitable holding structure 46, at the ends of the holding section 44. The holding section 44 is adjusted to the shape of the direction-guiding component 28 so that the direction-guiding component 28 can be incorporated in the guiding chamber 26 seamlessly. For example, the holding section 44 may be a cylindrical shaped passage running through the guiding chamber 26. The holding structures 46 ensures that the direction-guiding component 28 is safely fixed within the guiding chamber 26 and the holding section 44.

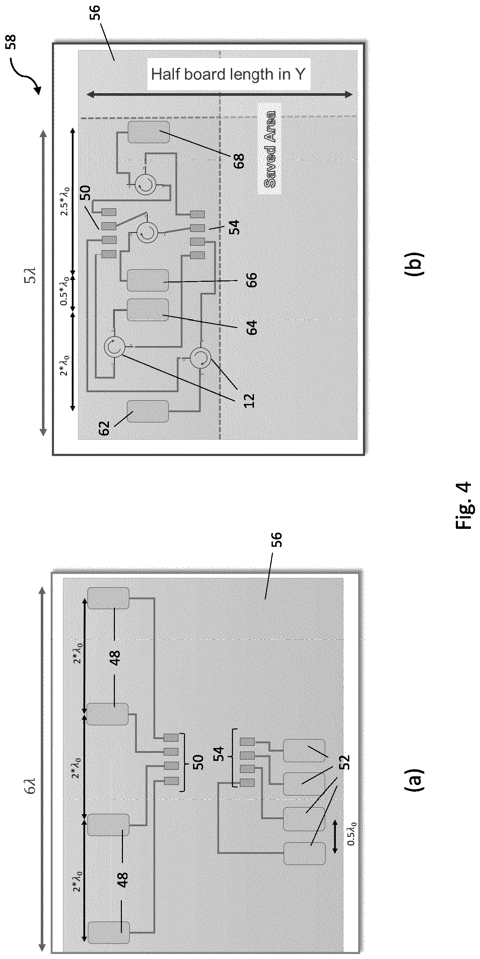

Fig. 4a illustrates a circuit layout of a MIMO system according to the prior art. As shown in Fig. 4a, the MIMO system comprises four transmit antennas 48 connected to four respective transmitters 50 via respective channels and four receive antennas 52 connected to four respective receivers 54 via respective channels. The components are arranged on a printed circuit board (PCB) 56. The four transmit antennas 48 are arranged in an upper half of the PCB 56 along a straight line in an azimuth direction, i.e. along a horizontal line, wherein the distance between two adjacent transmit antennas 48 is $2\lambda_0$, wherein $\lambda_0$ corresponds to the wavelength of the electromagnetic signal. In conventional antenna configurations, the receive antennas 52 have to be arranged such that the distance between receive antennas 52 and transmit antennas 48 is maximized, in order to reduce the potential for interference and maximize diversity gain and spatial resolution. Therefore, the receive antennas 52 in Fig. 4a are arranged in a lower half of the PCB 56 along a straight line in an azimuth direction, wherein the distance between two adjacent receive antennas 52 is $0.5\lambda 0$. However, such a configuration requires a significant amount of space on the PCB 56.

Fig. 4b illustrates a circuit layout of a MIMO system 58 according an embodiment of the present disclosure. The MIMO system 58 comprises four transceiver antennas 62-68 arranged along a straight line in an azimuth direction, each connected to a respective air waveguide circulator 12, wherein each of the air waveguide circulators 12 is connected to a respective transmitter 50 and receiver 54. The distance between a first transceiver antenna 62 and an adjacent second trans-

ceiver antenna 64 is $2\lambda_0$, the distance between the second transceiver antenna 64 and an adjacent third transceiver antenna 66 is $0.5\lambda_0$ and the distance between the third transceiver antenna 66 and an adjacent fourth transceiver antenna 68 is $2.5\lambda_0$. The components are arranged on the PCB 56 which is the same size as in Fig. 4a. All the components are arranged at an upper half of the PCB 56. As the circuit layout only comprises four antennas, instead of eight antennas as shown in Fig. 4a, the arrangement of components on the PCB 56 consumes significantly less amount of space. In fact, at least 50% of the space of the PCB 56 may be saved compared to a conventional arrangement shown in Fig. 4a. By using the presented air waveguide circulator 12 the MIMO system 58 is capable of maintaining a high isolation while the distance between each of the components on the PCB 56 can be reduced.

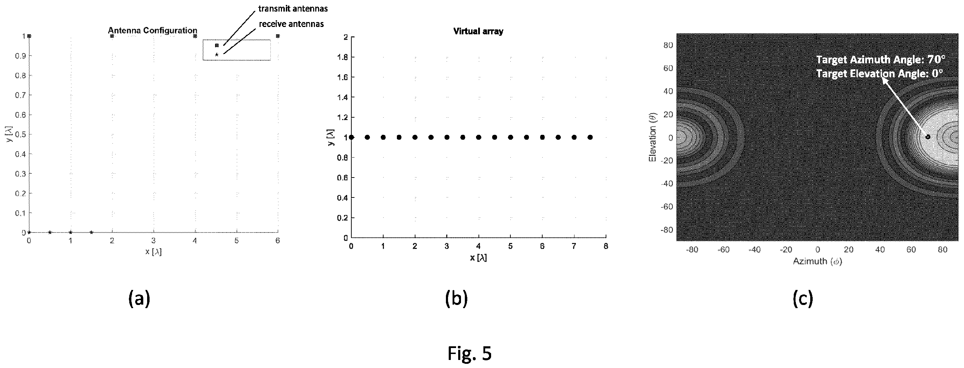

Fig. 5 depicts an antenna configuration (a), a corresponding virtual array (b) and a corresponding ambiguity plot (c) according to the prior art.

Fig. 5a depicts the spacing of the transmit antennas 48 and receive antennas 52 on the PCB 56 wherein the x-axis relates to the spacing in azimuth direction (horizontal) and the y-axis relates to the spacing in elevation direction (vertical). Four transmit antennas 48 and four receive antennas 52 are arranged in accordance with the arrangement of Fig. 4a. In particular, the transmit antennas 48 are arranged along a straight line in an azimuth direction, wherein the distance between two adjacent transmit antennas 48 is $2\lambda_0$. The receive antennas 52 are arranged in a lower half of the PCB 56 along a straight line in an azimuth direction, wherein the distance between two adjacent receive antennas 52 is $0.5\lambda_0$. The transmit antennas 48 are arranged with an offset in elevation direction of $\lambda_0$.

The resulting virtual array of the configuration is shown in Fig. 5b and may be determined by multiplying the transmit antenna dots shown in Fig. 5a with the receive antenna dots shown in Fig. 5a. The resulting virtual array refers to the positions of virtual receive antennas created by combining signals from multiple transmit antennas 48 and receive antennas 52. The shown virtual array has an aperture of $7.5\lambda_0$, and is able to resolve 15 targets unambiguously as shown in the ambiguity plot of Fig. 5c.

The x-axis of Fig. 5c represents the azimuth angle, which is the angle measured in the horizontal plane relative to a reference direction. This angle determines the horizontal direction of the target. The y-axis represents the elevation angle, which is the angle measured in the vertical plane relative to the horizon. This angle determines the height or altitude of the target relative to the radar or antenna system. The plot contains color-coded regions, herein different greyscales, that represent the strength of the received signal or the level of ambiguity in detecting targets at various angles. Brighter grey scales on the plot indicate areas of strong signal correlation, suggesting the presence of a target at those specific angles. The resolution in an azimuth direction for a target at $\theta=70°$ can be calculated as follows:

$$\Delta\theta = \frac{\lambda_0}{L \cdot \cos\theta} = 22.3°$$

wherein $\theta$ is the angle of observation, $\lambda_0$ is the wavelength of the electromagnetic signal and L is the virtual aperture of the antenna array.

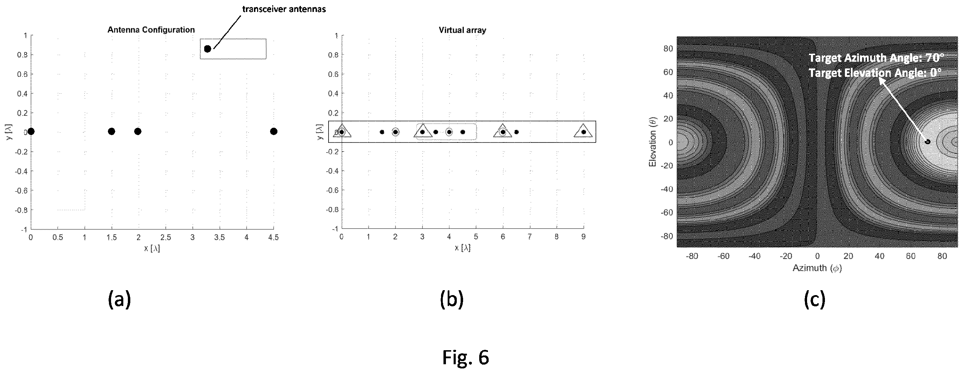

Fig. 6 illustrates an antenna configuration (a), a corresponding virtual array (b) and a corresponding ambiguity plot (c) according to an embodiment of the present disclosure.

Fig. 6a depicts an antenna configuration corresponding to the configuration of Fig. 4b. The four transceiver antenna positions are arranged as follows: the distance between a first transceiver antenna 62 and an adjacent second transceiver antenna 64 is $2\lambda_0$, the distance between the second transceiver antenna 64 and an adjacent third transceiver antenna 66 is $0.5\lambda_0$ and the distance between the third transceiver antenna 66 and an adjacent fourth transceiver antenna 68 is $2.5\lambda_0$. As the transceiver antennas 62, 64, 66, 68 are used for both transmission and reception, the antenna geometries are designed such that it synthesizes a virtual array, that may be resolved with existing angle finding methods, wherein the targets are resolved unambiguously. The resulting virtual array shown in Fig. 6b has an aperture of $9\lambda_0$ which gives better angular accuracy compared to the conventional configuration shown in Fig. 5, and is able to resolve 9 targets unambiguously. The virtual array is designed to unambiguously find target angles by using the concept of coprime arrays, wherein the dots having a circle or triangle may be used as coprime arrays. Furthermore, the concept of dense and sparse arrays is used, as indicated by the rectangles in Fig. 6b. By using the existing processing algorithms adapted to these concepts the resolution of the MIMO system 58 may be improved significantly. The resolution in an azimuth direction for a target at $\theta=70°$ can be calculated using the previous equation, wherein the resolution is $\Delta\theta = 18.6°$.

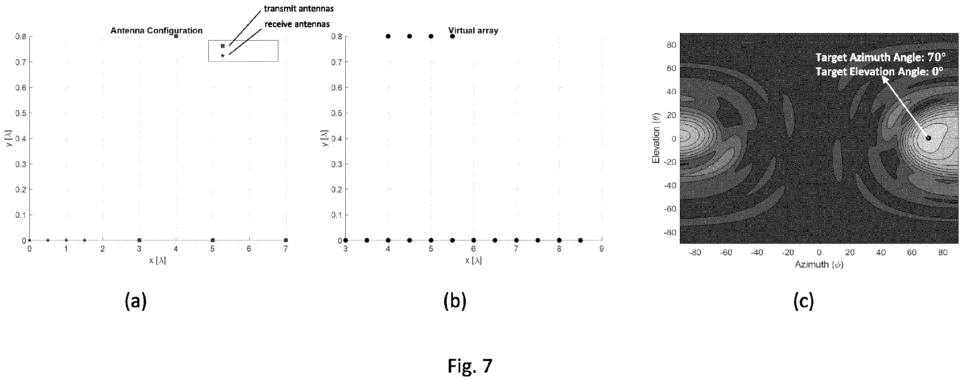

Fig. 7 depicts an antenna configuration (a), a corresponding virtual array (b) and a corresponding ambiguity plot (c) according to the prior art. In the depicted configuration three of the transmit antennas 48 are placed along the line of the receive antennas 52 wherein one of the receive antennas 52 is placed on the PCB 56 with an offset of $0.8\lambda_0$ in an elevation direction. The resulting virtual array shown in Fig. 7b has an aperture of $5.5\lambda_0$ and is able to resolve 11 targets unambiguously using known angle finding methods. The resulting ambiguity plot is shown in Fig. 7c.

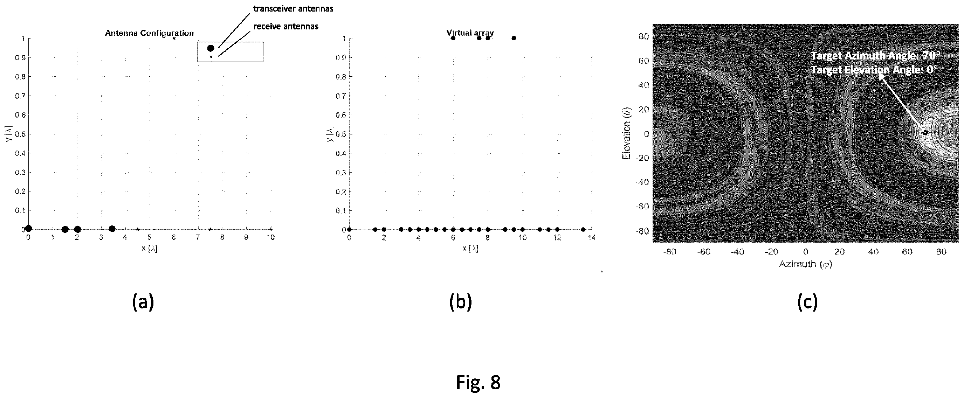

Fig. 8 depicts an antenna configuration (a) with four transceiver antennas 62-68 and four receive antennas 52, a corresponding virtual array (b) and a corresponding ambiguity plot (c) according to an embodiment of the present disclosure. The four transceiver antennas 62-68 are used for transmission and reception along with additional four standalone receive antennas 52. The antenna geometry is designed such that it synthesizes a virtual array shown in Fig. 8b, that with existing angle finding methods enables resolving targets unambiguously. The virtual array shown in Fig. 8b has an aperture of $13.5\lambda_0$ which gives better angular accuracy compared to conventional configurations shown before and is able to resolve 20 targets. The corresponding ambiguity plot is illustrated in Fig. 8c.

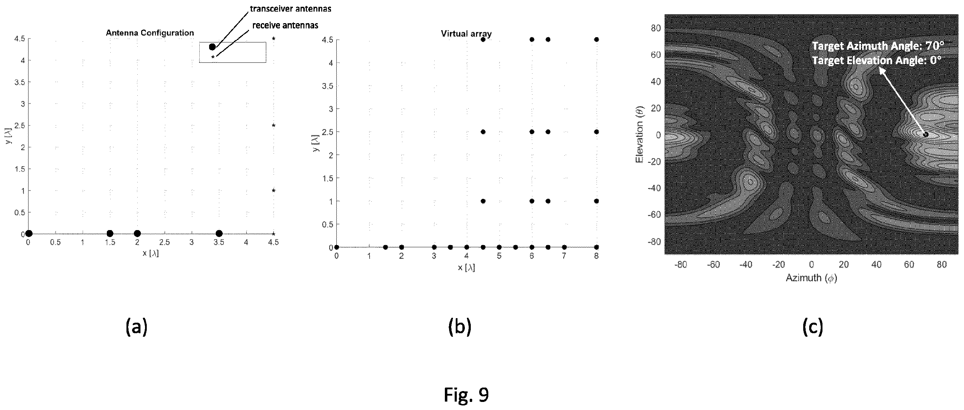

Fig. 9 depicts an antenna configuration (a) with four transceiver antennas 62-68 and four receive antennas 52, a corresponding virtual array (b) and a corresponding ambiguity plot (c) according to another embodiment of the present disclosure. The four transceiver antennas 62-68 are used for transmission and reception along with additional four standalone receive antennas 52. The resulting virtual array shown in Fig. 9b has an aperture of $8\lambda_0$ which gives better angular accuracy compared to conventional configurations shown earlier, and is able to resolve 12 targets. The corresponding ambiguity plot is illustrated in Fig. 9c.

Reference numeral list

| | |
|---|---|
| 12 | circulator |
| 14 | first port |
| 16 | second port |
| 18 | third port |
| 20 | transmitter |
| 22 | antenna |
| 24 | receiver |
| 26 | guiding chamber |
| 28 | direction-guiding component |
| 30 | teflon base structure |
| 32 | strontium hexagonal ferrite disks |
| 34 | centre line |
| 36 | recesses |
| 38-42 | connection elements |
| 44 | holding section |
| 46 | holding structure |
| 48 | transmit antennas |
| 50 | transmitters |
| 52 | receive antennas |
| 54 | receivers |
| 56 | printed circuit board |
| 58 | MIMO system |
| 62 | first transceiver antenna |
| 64 | second transceiver antenna |
| 66 | third transceiver antenna |
| 68 | fourth transceiver antenna |

**Claims**

1. MIMO (Multiple Input Multiple Output) system (58), in particular radar system, comprising:

at least one transmitter (50) for transmitting an electromagnetic signal,
at least one receiver (54) for receiving an electromagnetic signal,
at least one transceiver antenna (62, 64, 66, 68) for radiating an electromagnetic signal into an environment and/or receiving an electromagnetic signal from the environment,
at least one air waveguide circulator (12) connected to the at least one transmitter (20), to the at least one receiver (54) and to the at least one transceiver antenna (62, 64, 66, 68), the circulator (12) comprising:

a guiding chamber (26) having a spherical base shape and comprising a first port (14), a second port (16) and a third port (18) for inputting and/or outputting electromagnetic signals, wherein the first port (14) is connected to the transmitter (20), the second port (16) is connected to the transceiver antenna (62, 64, 66, 68) and the third port (18) is connected to the receiver (54), and a direction-guiding component (28) disposed along a centre line (34) of the guiding chamber (26), the centre line (34) having the same distance to any of the ports (14, 16, 18) and the direction-guiding component (28) defining the direction of transmission of an inputted electromagnetic signal.

2. MIMO system (58) according to claim 1, wherein the air waveguide circulator (12) is a self-biased circulator, wherein the direction-guiding component (28) is a physical unit.

3. MIMO system (58) according to claim 1 or 2, wherein the direction-guiding component (28) comprises hard magnetic material, preferably strontium hexagonal ferrite.

4. MIMO system (58) according to any one of the preceding claims, wherein the guiding chamber (26) comprises at least one recess (36) between two adjacent ports (14, 16, 18).

5. MIMO system (58) according to claim 4, wherein the recesses (36) have a corrugated shape.

6. MIMO system according to any one of the preceding claims, wherein impedance matching is performed using a quarter-wavelength matching technique, wherein the distance between two adjacent ports is designed to be a quarter of a wavelength of the transmitted electromagnetic signal.

7. MIMO system (58) according to any one of the preceding claims,

   wherein the MIMO system comprises four transmitters (48), four receivers (54), four transceiver antennas (62, 64, 66, 68) and four self-biased air wave guide circulators (12),
   wherein each of the self-biased air wave guide circulators (12) is connected to a respective transmitter (50), a respective receiver (54) and a respective transceiver antenna (62, 64, 66, 68).

8. MIMO system (58) according to any one of the preceding claims,
   wherein a first number of the transceiver antennas (62, 64, 66, 68) are disposed along a first, straight line in an azimuth direction or elevation direction forming a linear array.

9. MIMO system (58) according to claim 8,
   wherein a second number of the transceiver antennas (62, 64, 66, 68) are disposed along a second, straight line in an azimuth direction or elevation direction, wherein the transceiver antennas (62, 64, 66, 68) form a planar array.

10. MIMO system (58) according to any one of the preceding claims,
    wherein the MIMO system further comprises:
    receive antennas (52), wherein each of the receive antenna (52) is connected to a respective receiver (54).

11. MIMO system (58) according to claim 10,
    at least one of the receive antennas (52) is disposed along a third straight line, wherein the third line is perpendicular to the first and/or second line.

12. MIMO system (58) according to any one of the preceding claims,
    wherein the arrangement of transceiver antennas (62, 64, 66, 68) and/or receive antennas (52) comprises a combination of at least two of the following: coprime arrays, dense arrays and sparse arrays.

13. MIMO system (58) according to any one of claims 8 to 12,

    wherein the transceiver antennas (62, 64, 66, 68) are disposed along the first line in an azimuth direction, wherein the receive antennas (52) are disposed along the third line in an elevation direction, wherein a first receive antenna (52) is disposed on an intersection of the first and third line, wherein a distance between a first and second transceiver antenna (62, 64) is $1.5\lambda_0$, a distance between the second and a third transceiver antenna (64, 66) is $0.5\lambda_0$ and a distance between the third and a fourth transceiver antenna (66, 68) is $1.5\lambda_0$,
wherein a distance between the fourth transceiver antenna (68) and the first receive antenna (52) is $\lambda_0$, a distance between the first and a second receive antenna (52) is $\lambda_0$, a distance between the second and a third receive antenna (52) is $1.5\lambda_0$ and a distance between the third and a fourth receive antenna (52) is $2\lambda_0$, wherein $\lambda_0$ corresponds to the wavelength of the electromagnetic signal.

14. MIMO system (58) according to any one of the preceding claims,
    wherein at least one waveguide channel connected to a first transceiver antenna (62, 64, 66, 68) and at least one waveguide channel connected to a second transceiver antenna (62, 64, 66, 68) are arranged on different layers of a PCB (56).

15. Method for transmitting and receiving electromagnetic signals using a MIMO system (58) according to any of the preceding claims, comprising:

    transmitting an electromagnetic signal, using a transmitter (48), to a first port (14) of an air waveguide circulator (12),
    directing the electromagnetic signal to a second port (16) of the air waveguide circulator (12),
    transmitting the electromagnetic signal from the second port (16) of the air waveguide circulator (12) to a transceiver antenna (62, 64, 66, 68),
    radiating the electromagnetic signal into an environment using the transceiver antenna (62, 64, 66, 68),
    receiving a reflected electromagnetic signal reflected from an object in the environment by the transceiver antenna (62, 64, 66, 68),
    transmitting the reflected electromagnetic signal from the transceiver antenna (62, 64, 66, 68) to the second port (16) of the air waveguide circulator (12),
    directing the reflected electromagnetic signal from the second port (16) to a third port (18) of the air waveguide circulator (12),
    transmitting the reflected electromagnetic signal from the third port (18) to the receiver (54),
    determining a distance between the MIMO system (58) and the object based on the reflected electromagnetic signal.

Fig. 1

Fig. 2

Fig. 3a

Fig. 3b

EP 4 693 733 A1

Fig. 4

(a)                                    (b)                                    (c)

Fig. 5

EP 4 693 733 A1

(a)            (b)            (c)

Fig. 6

(a)                              (b)                              (c)

Fig. 7

Fig. 8

Fig. 9

Europäisches
Patentamt

European
Patent Office

Office européen
des brevets

# EUROPEAN SEARCH REPORT

**Application Number**

EP 24 19 2922

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/226658 A1 (ZHANG SHAOLIN [CN] ET AL) 22 July 2021 (2021-07-22) * paragraphs [0023] - [0026]; figures 2, 3 * ----- | 1-15 | INV. H01Q1/32 H01P1/39 |
| A | US 2022/181760 A1 (MACFARLANE IAIN ALEXANDER [GB] ET AL) 9 June 2022 (2022-06-09) * paragraphs [0054], [0067], [0071], [0074] - [0077], [0115] - [0119], [0151] * * figures 3A, 3D, 3E, 4B * ----- | 1-15 | |

**TECHNICAL FIELDS SEARCHED (IPC)**

H01Q
H01P
G01S

The present search report has been drawn up for all claims

| Place of search | Date of completion of the search | Examiner |
|---|---|---|
| The Hague | 27 January 2025 | Ali, Ahmed |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.......................................................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 19 2922

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2025

| Patent document cited in search report | | Publication date | Patent family member(s) | | Publication date |
|---|---|---|---|---|---|
| US 2021226658 | A1 | 22-07-2021 | BR | 212020016067 U2 | 26-10-2021 |
| | | | CN | 209249671 U | 13-08-2019 |
| | | | EP | 3920335 A1 | 08-12-2021 |
| | | | KR | 20200001816 U | 13-08-2020 |
| | | | TW | M598537 U | 11-07-2020 |
| | | | US | 2021226658 A1 | 22-07-2021 |
| | | | WO | 2020155498 A1 | 06-08-2020 |
| US 2022181760 | A1 | 09-06-2022 | US | 2022181760 A1 | 09-06-2022 |
| | | | US | 2024079753 A1 | 07-03-2024 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20220113399 A1
- US 20230236288 A1
- US 20210373144 A1